# EUROPÄISCHE PATENTSCHRIFT

(11) **EP 4 055 362 B1**
(45) Veröffentlichungstag und Bekanntmachung des Hinweises auf die Patenterteilung: **20.08.2025**
(21) Anmeldenummer: 20801207.0
(22) Anmeldetag: 03.11.2020
(51) Int. Cl.: G01N 3/14, G01M 17/007, G01M 7/08

(54) **PRÜFPENDELANORDNUNG ZUR DURCHFÜHRUNG VON HALSZERTIFIZIERUNGEN SOWIE VERFAHREN ZUM BETRIEB EINER PRÜFPENDELANORDNUNG**
TEST PENDULUM ARRANGEMENT FOR CARRYING OUT NECK CERTIFICATIONS AND METHOD FOR OPERATING A TEST PENDULUM ARRANGEMENT
AGENCEMENT DE PENDULE D'ESSAI POUR LA RÉALISATION DE CERTIFICATIONS DE COU ET PROCÉDÉ DE FONCTIONNEMENT D'UN AGENCEMENT DE PENDULE D'ESSAI

(30) Priorität: 05.11.2019 DE 102019129721
(43) Veröffentlichungstag der Anmeldung: 14.09.2022
(73) Patentinhaber: ATD-Labtech GmbH, 63843 Niedernberg (DE)
(72) Erfinder: PFEIFER, Gerhard, 63867 Johannesberg (DE); SZINGSNIS, Christoph, 63743 Aschaffenburg (DE)
(74) Vertreter: Rösler Rasch van der Heide & Partner
(86) Internationale Anmeldenummer: PCT/EP2020/080733
(87) Internationale Veröffentlichungsnummer: WO 2021/089497

(56) Entgegenhaltungen:
- CN-A- 106 501 007
- CN-A- 108 918 075
- DE-A1- 102015 006 507

## Beschreibung

Nachfolgend werden ein Bremsvorrichtungssystem für eine Prüfpendelanordnung, eine Prüfpendelanordnung zur Durchführung von Halszertifizierungen sowie ein Verfahren zum Betrieb der Prüfpendelanordnung beschrieben. Die Prüfpendelanordnung dient zur Zertifizierung von Crashtest-Dummys.

Crashtest-Dummys werden von der Kraftfahrzeugindustrie verwendet, um die Sicherheit von Kraftfahrzeugen hinsichtlich des Insassenschutzes bei Unfällen zu prüfen. Hierzu werden verschiedene normierte Crashtests durchgeführt, z.B. Frontalcrashs, Seitencrashs, Heckcrashs und Überschlagstests. Die Crashtest-Dummys werden in zu testende Kraftfahrzeuge gesetzt oder anderweitig positioniert und die entsprechenden Crashtests durchgeführt.

Die verwendeten Crashtest-Dummys weisen eine Vielzahl von Sensoren auf, um die Einwirkung des Crashs auf den Crashtest-Dummy messen zu können. Die verwendeten Sensoren sind in vielen Fällen Kraftsensoren, Wegsensoren und Beschleunigungssensoren. Während der Durchführung des Crashtests werden durch diese Sensoren auftretende Beschleunigungen, Eindringungen und Kräfte gemessen und aufgezeichnet. Die Messdaten werden anschließend ausgewertet und die Belastung überprüft.

Die Crashtest-Dummys sollen in ihren Eigenschaften Menschen simulieren. Dies bezieht sich auf Maße, Beweglichkeit, Gewicht und dergleichen. Crashtest-Dummys sind aufgrund dessen schwer zu handhaben.

Ein Crashtest-Dummy regelmäßig zertifiziert werden, um sicherzustellen, dass dieser verlässliche Werte zurückgibt. Die Messkette aus Mechanik Sensorik der Crashtest-Dummys muss zur Zertifizierung überprüft werden. Hierzu sind eine Vielzahl unterschiedlicher Tests vonnöten.

Einige der Tests sehen vor, dass ein Prüfpendel mit definierter Geometrie, Masse und Schwerpunktlage mit in Verlängerung montierter Kopf-Hals-Baugruppe an eine Aluminium-Wabenstruktur anprallt. Das Pendel hat beim Aufprall aufgrund der bekannten Masse und der genau definierten Pendelbewegung einen exakt bestimmten Impuls. Diese Präzision wird genutzt, um die Reaktion der Kopf-Hals-Baugruppe des Crashtest-Dummys auf den exakt bestimmten Impuls zu prüfen. Sollte sich ein Verhalten zeigen, das nicht innerhalb eines engen Wertekorridors liegt, weist dies auf einen Defekt der Kopf-Hals-Baugruppe des Crashtest-Dummys hin und die defekten mechanischen Komponenten werden ausgetauscht. Durch die Zertifizierung der Crashtest-Dummys wird sichergestellt, dass das Messsystem Crashtest-Dummy korrekte Werte liefert, mit Hilfe derer die Fahrzeugzulassungsprüfungen durchführbar sind und die zielführende Entwicklung von entsprechenden Rückhaltesystemen ermöglicht.

Übliche Zertifizierungseinrichtungen, die mit den vorbeschriebenen Prüfpendeln arbeiten, sind um das Prüfpendel herum konstruiert. Bei Räumen mit geringer Deckenhöhe liegt folglich die Höhe des Referenzpunktes ergonomisch ungünstig niedrig. Zudem müssen zur Zertifizierung eines einzelnen Crashtest-Dummys mehrere Versuche am Prüfpendel vorgenommen werden. Die Durchführung verlangt viel Erfahrung und muss sehr präzise erfolgen. Diese Aufgabe ist zeitaufwendig, sodass nur eine geringe Anzahl von Zertifizierungen pro Tag erledigt werden können. Zudem stehen die Crashtest-Dummys während der Zertifizierung nicht zur Durchführung von Crashtests zur Verfügung. Der Betrieb eines Zertifizierungslabors ist notwendig, aber unwirtschaftlich.

Die zur Zertifizierung von Crashtest-Dummys notwendigen Prüfeinrichtungen, insbesondere die zu verwendenden Pendel, haben einen hohen Platzbedarf, da das Pendel über eine große Distanz ausgelenkt werden muss. Aufbau und Betrieb entsprechender Crashtest-Dummy-Zertifizierungseinrichtungen sind daher mit Komplikationen verbunden. Einerseits müssen Räume mit ausreichenden Abmaßen bereitgestellt werden, andererseits müssen die Einrichtungen im Betrieb gegen Unfälle, vor allem Zusammenstöße mit schwingenden Prüfpendeln, abgesichert werden.

Zur Zertifizierung einer Halswirbelsäule eines Crashtest-Dummys ist gemäß geltender Norm vorgesehen, dass eine Halswirbelsäule zusammen mit einem daran befestigter Kopf-Hals-Baugruppe des Crashtest-Dummys an einem starren Pendel festgelegt wird. Das Pendel wird nach oben ausgelenkt und von dort aus von der Schwerkraft beschleunigt, sodass das Pendel gegen eine deformierbare Aluminiumwabe anschlägt und der vorhandene Impuls die Halswirbelsäule der Kopf-Hals-Baugruppe des Crashtest-Dummys durchschwingt. Anhand des Durchschwingens der Kopf-Hals-Baugruppe kann geprüft werden, ob die Halswirbelsäule des Crashtest-Dummys den Anforderungen entspricht oder nicht. Die benötigte Auslenkung des Pendels nach oben beträgt bis zu 125° gegenüber einem Referenzpunkt, der im Bereich der Aluminiumwabe liegt. Nach derzeitiger Norm liegt der Referenzpunkt bei 114,3 mm Abstand der Drehachse und Mittelachse des Pendels zur Anprallfläche (Montagefläche der Wabe). Dies ist in etwa die Position, die die gestauchte Wabe definiert. Dies bedeutet, dass eine Auslenkung über die Horizontale hinweg notwendig ist, um die Kopf-Hals-Baugruppe ausreichend zu beschleunigen. Dies ist einerseits aufwendig und erfordert andererseits bauliche Voraussetzungen, die in üblichen Gebäuden nur schwer zu erfüllen sind.

Aus der DE 10 2015 006 507 A1 ist eine Prüfpendelanordnung zur Durchführung von Crashtest-Dummy-Zertifizierungen bekannt, mit einem starren Pendel, das an einem ersten Ende um eine obere Drehachse herum drehbar angeordnet ist und das an einem zweiten Ende eine Aufnahme für eine Kopf-Hals-Baugruppe eines Crashtest-Dummys aufweist, wobei wenigstens ein horizontaler Antrieb und wenigstens ein vertikaler Antrieb vorgesehen sind, wobei der horizontale Antrieb und der vertikale Antrieb zum Beschleunigen des Pendels vorgesehen sind.

Die Aluminiumwabe, an die das Prüfpendel anschlägt, muss für alle zur Zertifizierung notwendigen Pendeltests neu aus einem Block geschnitten und vor Testdurchführung ausgetauscht werden. Der geforderte Verzögerungspuls wird durch die Wabenanzahl, Vorstauchung und Anordnungsposition beeinflusst und es muss für jeden Test iterativ die passende Wabe gefunden werden. Der Betrieb entsprechender Prüfpendelanordnungen benötigt sehr erfahrenes Bedienpersonal, ist sehr zeitaufwändig und ist somit teuer.

Aufgabe ist es somit, Prüfpendelanordnungen sowie Verfahren zum Betrieb einer Prüfpendelanordnung der eingangs genannten Art dahingehend weiterzubilden, dass entsprechende Prüfpendelanordnungen mit geringerem Rüstaufwand auskommen als herkömmliche Prüfpendelanordnungen.

Die Aufgabe wird gelöst durch ein Bremsvorrichtungssystem für eine Prüfpendelanordnung gemäß Anspruch 1, eine Prüfpendelanordnung gemäß dem nebengeordneten Anspruch 7 sowie durch ein Verfahren zum Betrieb einer Prüfpendelanordnung gemäß dem nebengeordneten Anspruch 11. Weiterführende Ausgestaltungen von Prüfpendelanordnungen sowie dem Verfahren zum Betrieb der Prüfpendelanordnung sind Gegenstand der abhängigen Ansprüche.

Nachfolgend wird ein Bremsvorrichtungssystem für eine Prüfpendelanordnung zur Durchführung von Crashtest-Dummy-Zertifizierungen beschrieben, mit einer Bremsvorrichtung zum Abbremsen eines sich bewegenden Pendels, an dem eine Kopf-Hals-Baugruppe eines Crashtest-Dummys anordenbar ist, in einem unteren Bremsbereich, wobei die Bremsvorrichtung einen mittels einer Motoranordnung axial betätigbaren Stößel aufweist, der dazu ausgebildet ist, in dem definierten unteren Bremsbereich mit dem Pendel zur Anlage zu kommen und das Pendel durch eine mittels des Stößels ausgeübten Bremskraft abzubremsen.

Herkömmliche Prüfpendelanordnungen weisen, wie eingangs beschrieben, in der Regel eine Aluminiumwabenstruktur auf, die durch Intrusion des Pendels deformiert wird und dadurch Bewegungsenergie des bewegten Pendels abbaut, an dem die Kopf-Hals-Baugruppe des Crashtest-Dummys angeordnet ist. Dies bedingt, dass die Aluminiumwabenstruktur für jede einzelne Zertifizierung ausgetauscht werden muss. Die damit verbundenen Rüstkosten und -zeiten sind erheblich, was die Anzahl an möglichen Prüfdurchgängen pro Zeiteinheit reduziert.

Mithilfe der Bremsvorrichtung kann die Bremswirkung der Aluminiumwabenstruktur präzise nachgebildet werden, sodass eine entsprechende Prüfpendelanordnung wesentlich häufiger pro Zeiteinheit als herkömmliche Prüfpendelanordnungen verwendet werden kann und Kosten für die Aluminiumwabenstruktur vermieden werden können. Dadurch kann auch der bei der Zertifizierung entstehende Abfall reduziert werden, da die Aluminiumwabenstruktur jeweils nur ein einziges Mal verwendet werden kann.

Der definierte Bremsbereich ist gemäß einer Ausgestaltung der Bereich, den bei herkömmlichen Prüfpendelanordnungen die Aluminiumwabenstruktur einnimmt. In diesem Bereich wird das Pendel mit der daran befestigten Kopf-Hals-Baugruppe auf kurzer Strecke abgebremst, was aufgrund der Massenträgheit bedingt, dass der Hals der Kopf-Hals-Baugruppe durchschwingt und elastisch verbogen wird. Das Maß der Verbiegung ist für jeden Dummy genormt oder definiert und muss von den in der Kopf-Hals-Baugruppe vorgesehenen Sensoren korrekt aufgezeichnet werden. Dies wird mithilfe der Prüfpendelanordnung überprüft, die Sensoren ggf. kalibriert und die Kopf-Hals-Baugruppe zertifiziert. Sollten die Sensoren Meßwerte außerhalb eines zulässigen Bereichs wiedergeben, kann dies auf einen Defekt und eine Notwendigkeit zur Reparatur bzw. Wartung hinweisen.

Einen entsprechendes Bremsvorrichtungssystem kann bei herkömmlichen Prüfpendelanordnungen nachgerüstet werden, um bereits bestehende Prüfpendelanordnungen effizienter betreiben zu können.

Das Pendel kann insbesondere ein starres Pendel sein, das beispielsweise ein Rohr aufweist, insbesondere ein Vierkantrohr.

Zur Festlegung der Kopf-Hals-Baugruppe kann am Pendel eine Kopf-Hals-Baugruppen-Aufnahme vorgesehen sein. Eine solche Kopf-Hals-Baugruppen-Aufnahme kann genormt oder standardisiert sein. Die Kopf-Hals-Baugruppen-Aufnahme kann des Weiteren die Festlegung verschiedener Kopf-Hals-Baugruppentypen erlauben.

In einer ersten weiterführenden Ausgestaltung kann ein Positionsgeber zur Anordnung an dem Pendel vorgesehen sein, um eine Momentanposition des Pendels zu ermitteln, wobei eine Steuerung vorgesehen ist, die mit dem Positionsgeber und der Bremsvorrichtung gekoppelt ist, wobei die Steuerung dazu eingerichtet ist, die Motoranordnung in Abhängigkeit von den Signalen des Positionsgebers zu steuern.

Ein entsprechender Positionsgeber kann insbesondere an einer oberen Rotationsachse des Pendels angeordnet sein, um eine Winkellage des Pendels zu überwachen und an die Steuerung zu übermitteln. Der Positionsgeber kann insbesondere ein digitaler Positionsgeber sein, beispielsweise ein optischer Positionsgeber. Ebenso sind analoge Positionsgeber möglich, die zwar eine höhere Auflösung aufweisen, jedoch regelmäßig kalibriert werden müssen und aufgrund ihres Rauschverhaltens höhere Anforderungen an die Umgebungsbedingungen stellen.

Mithilfe des Positionsgebers und der Steuerung ist es möglich, die Motoranordnung in Abhängigkeit von der aktuellen Position des Pendels zu steuern, um beispielsweise die Bremskraft rechtzeitig aufbringen zu können.

Hierzu ist es erforderlich, dass die Position des Stößels der Bremsvorrichtung ebenfalls bekannt ist. Dies kann mithilfe eines Positionsgebers erfolgen.

Ein solcher Positionsgeber kann in einer weiterführenden Ausgestaltung durch ein in eine Führung, z.B. Kugelschienenführung, integriertes Messsystem erfolgen. Hierdurch ist eine Synchronisierung der Bewegungen des Pendels und des Stößels möglich

Des Weiteren sind in manchen Ausgestaltungen fortgeschrittenere Funktionen möglich, beispielsweise ein Anfahren des Stößels in Pendelrichtung, sodass Pendel und Stößel relativ sanft zur Anlage kommen, um Geräuschentwicklung, Vibrationen und Stöße zu reduzieren. Letzteres insbesondere zur Erhöhung der Präzision des Prüfvorgangs, da die Stöße andernfalls unter Umständen in einer Messvorrichtung der Kopf-Hals-Baugruppe sichtbar wären. Die Pendelrichtung ist die Richtung, in die das Pendel schwingt, also auf die Bremsvorrichtung zu.

In einer anderen weiterführenden Ausgestaltung kann vorgesehen sein, dass die Motoranordnung wenigstens zwei Linearmotoren aufweist, wobei der Stößel an einem Motorschlitten festgelegt ist, wobei der Motorschlitten in den Linearmotoren geführt ist, wobei die Linearmotoren seitlich des Motorschlittens angeordnet sind.

Durch die Verwendung von zwei oder mehr Linearmotoren ist es möglich, die Kräfte der Linearmotoren aufzusummieren und somit sehr hohe Kräfte zu erzeugen und Pendel sowie Kopf-Hals-Baugruppe auf sehr kurzer Distanz abzubremsen. Linearmotoren sind in der Lage, definierte Kraftverläufe bereitzustellen, sodass das Verhalten einer Aluminiumwabenstruktur mit hinreichender Präzision nachgebildet werden kann.

In einer weiterführenden Ausgestaltung kann vorgesehen sein, dass die Motorschlitten beiderseits des Stößels angeordnet sind.

Hierdurch können seitliche Momente auf den Stößel durch den Antrieb vermieden werden und ein Verkanten kann verhindert werden.

In einer anderen weiterführenden Ausgestaltung kann vorgesehen sein, dass vier oder mehr Linearmotoren vorgesehen sind, wobei die Linearmotoren beiderseits des Stößels angeordnet sind, wobei wenigstens zwei Linearmotoren übereinandergestapelt angeordnet sind.

Hierdurch können die Linearmotoren sehr kompakt - in Pendelrichtung betrachtet - links und rechts des Stößels angeordnet und mit dem Stößel gekoppelt werden. Zum Koppeln kann beispielsweise ein Motorschlitten vorgesehen sein, an dem der Stößel festgelegt ist und der in Pendelrichtung beweglich angeordnet ist. Der Motorschlitten ist mit den Stapeln an Linearmotoren gekoppelt.

In einer anderen weiterführenden Ausgestaltung kann vorgesehen sein, dass der Stößel punktgelagert ist und/oder eine austauschbare Spitze aufweist.

Hierdurch können seitliche Kräfte auf die Motoranordnung vermieden werden und die Anlagebedingungen zwischen Pendel und Stößel sind einfacher zu definieren.

Eine austauschbare Spitze erlaubt es, die Bremsvorrichtung im Falle von Verschleiß, der vor allem am Stößel auftreten wird, leicht zu warten.

In einer anderen weiterführenden Ausgestaltung kann vorgesehen sein, dass die Bremsvorrichtung einen Dämpfer zur Verhinderung eines Durchschlagens des Stößels aufweist.

Dadurch kann bei Notabschaltung oder bei einem Fehlbetrieb eine Beschädigung der Bremsvorrichtung vermieden werden.

In einer anderen weiterführenden Ausgestaltung kann vorgesehen sein, dass der Stößel im ausgefahrenen Zustand durch eine Feder vorgespannt ist.

Hiermit kann zusätzliche Betriebssicherheit für die Bremsvorrichtung erreicht werden. Die Feder kann beispielsweise bei einem Stromausfall den Stößel möglichst weit einfahren, um die aus der Bremsvorrichtung herausstehende freie Länge des Stößels zu reduzieren, um ein Abknicken des Stößels beim unkontrollierten Aufprall des Pendels zu verhindern.

In einer anderen weiterführenden Ausgestaltung kann vorgesehen sein, dass die Bremsvorrichtung eine Befestigungsanordnung zur Festlegung eines Deformationselements aufweist.

Dies kann für bestimmte Tests sinnvoll sein, bei denen eine Aluminiumwabenstruktur verpflichtend vorgesehen ist. Des Weiteren kann hiermit die Bremsvorrichtung kalibriert werden, indem mit den gleichen Sensoren zunächst ein Versuch mit einer Aluminiumwabenstruktur vorgenommen wird und die Bremsvorrichtung derart und solange kalibriert wird, bis die Sensoren unter Verwendung der Bremsvorrichtung das gleiche Signal erfassen wie bei der Aluminiumwabenstruktur.

Ein erster unabhängiger Gegenstand betrifft eine Prüfpendelanordnung zur Durchführung von Crashtest-Dummy-Zertifizierungen, mit einem starren Pendel, das an einem ersten Ende um eine obere Drehachse herum drehbar angeordnet ist und das an einem zweiten Ende eine Aufnahme zur Anordnung einer Kopf-Hals-Baugruppe eines Crashtest-Dummys aufweist, wobei eine Bremsvorrichtung der zuvor beschriebenen Art vorgesehen ist.

Eine solche Prüfpendelanordnung ermöglicht einen effizienten Betrieb mit geringen Rüstkosten und -zeiten.

Das Pendel kann der jeweils geltenden Norm entsprechen und kann beispielsweise als Rechteckrohr ausgestaltet sein. Gewicht, Länge Schwerpunkt und dergleichen können ebenfalls der jeweiligen Norm entsprechen.

Es ist jedoch in einer weiterführenden Ausgestaltung auch möglich, von der vorgegebenen Norm des Pendels abzuweichen und stattdessen ein optimiertes Pendel zu verwenden, da die entsprechenden Kraft- und Verzögerungskurven von der Bremsvorrichtung unabhängig von den Eigenschaften des Pendels derart nachgebildet werden können, dass die geltenden Normen eingehalten werden. Hierdurch lässt sich eine verbesserte Prüfqualität erzielen, beispielsweise, wenn die träge Masse und/oder das Vibrationsverhalten des Prüfpendels optimiert werden.

Zur Festlegung der Kopf-Hals-Baugruppe kann am Pendel eine Kopf-Hals-Baugruppen-Aufnahme vorgesehen sein. Eine solche Kopf-Hals-Baugruppen-Aufnahme kann genormt oder standardisiert sein. Die Kopf-Hals-Baugruppen-Aufnahme kann des Weiteren die Festlegung verschiedener Kopf-Hals-Baugruppentypen erlauben.

In einer ersten weiterführenden Ausgestaltung kann vorgesehen sein, dass wenigstens ein Antrieb zum Beschleunigen des Pendels aus einer oberen Startposition heraus vorgesehen ist.

Der Antrieb kann am oberen Ende des Pendels angreifen, insbesondere an der Drehachse.

Mit Hilfe des Antriebs kann das starre Pendel stärker beschleunigt werden als durch die Schwerkraft allein, was es erlaubt, den für die Beschleunigung des Pendels zusammen mit der Kopf-Hals-Baugruppe auf die vorgesehene Geschwindigkeit zu verkürzen. Statt einer Auslenkung von 125° kann eine geringere Auslenkung vorgesehen sein, beispielsweise 90° oder sogar weniger als 90°. Der Antrieb sorgt dann dafür, dass die Kopf-Hals-Baugruppe bei Erreichen des Bremsbereichs (Referenzpunkt) präzise die richtige Geschwindigkeit hat. Mithilfe des Antriebs kann des Weiteren ein Anheben des Pendels in die Startposition erfolgen, sodass eine bequeme Überführung in die obere Startposition möglich ist.

In einer anderen weiterführenden Ausgestaltung kann vorgesehen sein, dass der Positionsgeber an einer Pendelachse angeordnet ist.

Hierdurch kann eine Positionsmessung direkt an der Pendelachse durchgeführt werden, wodurch ein kompakter Aufbau des Positionsgebers erreicht werden kann.

Ein entsprechender Positionsgeber kann im Falle eines Bremsvorrichtungssystems auch gut nachgerüstet werden.

In einer anderen weiterführenden Ausgestaltung kann vorgesehen sein, dass eine Hebevorrichtung zum Anheben des Pendels in eine Startposition vorgesehen ist, wobei die Hebevorrichtung einen abkoppelbaren Antrieb aufweist, sodass das Pendel bei Eintritt in den Bremsbereich frei schwingt.

Somit muss das Pendel nicht von Hand angehoben werden, was die körperliche Arbeitsbelastung reduziert und die Durchführung von Zertifizierungen beschleunigt.

Ein weiterer unabhängiger Gegenstand betrifft ein Verfahren zum Betrieb einer Prüfpendelanordnung der zuvor beschriebenen Art, wobei das Pendel in eine obere Startposition ausgelenkt und mithilfe des wenigstens einen Antriebs aus der oberen Startposition heraus beschleunigt und im unteren Bremsbereich durch die Bremsvorrichtung motorisch abgebremst wird.

Mithilfe des betreffenden Verfahrens ist es möglich, herkömmliche Prüfpendelanordnungen, die Aluminiumwabenstrukturen verwenden, zu ersetzen durch ein effizienteres Verfahren.

In einer anderen weiterführenden Ausgestaltung kann vorgesehen sein, dass der Stößel in eine ausgefahrene Position gebracht wird und in Abhängigkeit von der Position des Pendels zuerst in Pendelrichtung beschleunigt und anschließend entgegen der Pendelrichtung durch Aufbringung einer Motorkraft zusammen mit dem Pendel abgebremst wird.

Somit kann erreicht werden, dass der Stößel sanft mit dem Pendel zur Anlage kommt, wodurch Vibrationen und Stöße vermieden werden können und mechanische Belastungen auf die Bremsvorrichtung sowie den Stößel reduziert werden.

In einer anderen weiterführenden Ausgestaltung kann vorgesehen sein, dass der Stößel zwischen Beschleunigung in Pendelrichtung und Abbremsen entgegen der Pendelrichtung eine Fahrt in Pendelrichtung durchführt.

Hierdurch kann die Bremsvorrichtung stabilisiert werden und es werden Stöße durch den unkontrollierten Aufprall des Pendels auf den Stößel vermieden.

In einer anderen weiterführenden Ausgestaltung kann vorgesehen sein, dass die negative Beschleunigung des Pendels 350 Meter/Sekunde² beträgt.

Weitere Ziele, Merkmale sowie vorteilhafte Anwendungsmöglichkeiten der Erfindung ergeben sich aus der nachfolgenden Beschreibung eines Ausführungsbeispiels anhand der Zeichnungen. Dabei bilden sämtliche beschriebenen und/oder bildlich dargestellten Merkmale in ihrer sinnvollen Kombination den Gegenstand der vorliegenden Erfindung, auch unabhängig von den Patentansprüchen und deren Rückbezügen. Es zeigen schematisch:
- Fig. 1: eine perspektivische Ansicht einer Prüfpendelanordnung;
- Fig. 2: einen Ausschnitt der Prüfpendelanordnung aus Fig. 1;
- Fig. 3: einen weiteren Ausschnitt der Prüfpendelanordnung aus Fig. 1;
- Fig. 4 bis 8: eine Bremsvorrichtung der Prüfpendelanordnung in verschiedenen Darstellungen, sowie
- Fig. 9A-E: einen Ausschnitt der Prüfpendelanordnung aus Fig. 1 zu verschiedenen Phasen eines Zertifizierungslaufs einer Kopf-Hals-Baugruppe eines Crash-Test-Dummys.

Gleiche oder gleichwirkende Bauteile werden in den nachfolgenden Ausführungsbeispielen zur besseren Lesbarkeit mit gleichen Bezugszeichen versehen.

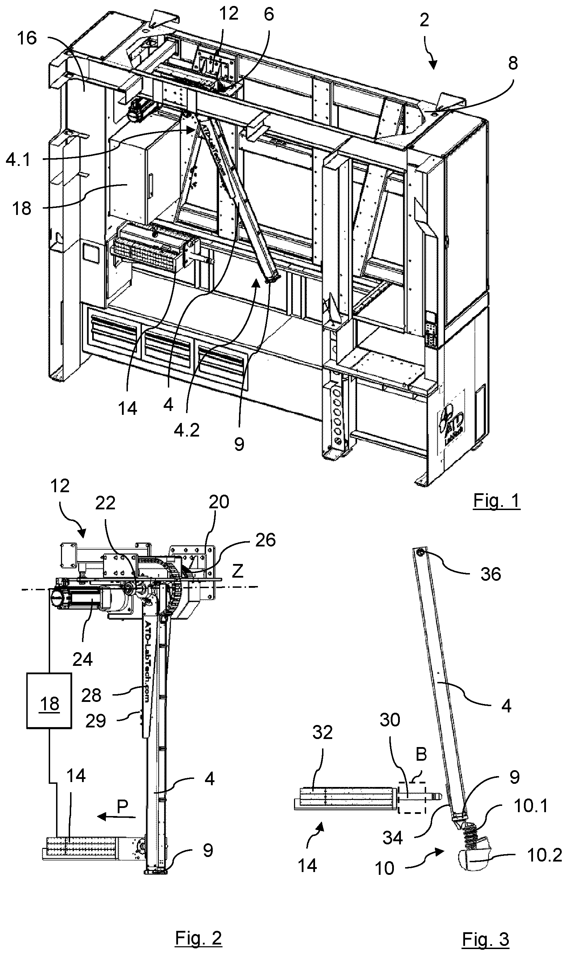

Fig. 1 zeigt eine perspektivische Ansicht auf eine Prüfpendelanordnung 2.

Die Prüfpendelanordnung 2 weist ein Pendel 4 auf, das an einem oberen Ende 4.1 um ein Drehzentrum Z herum drehbar an einer Aufhängung 6 aufgehängt ist. Die Aufhängung 6 ist in einer Rahmenanordnung 8 angeordnet. Die Rahmenanordnung 8 erlaubt es, die Prüfpendelanordnung 2 als geschlossene Einheit auszubilden.

An einem unteren Ende 4.2 des Pendels ist eine Aufnahme 9 für eine Kopf-Hals-Baugruppe 10 (siehe Fig. 3) eines (nicht dargestellten) Crashtest-Dummys vorgesehen. Die Kopf-Hals-Baugruppe 10 weist eine Halswirbelsäule 10.1 sowie einen daran festgelegten Kopf 10.2 auf.

Das Pendel 4 befindet sich in der Darstellung gemäß Fig. 1 in einer Zwischenposition.

Das Pendel 4 kann mittels eines Antriebes 12 motorisch bewegt werden. In einer Ausführungsform kann der Antrieb 12 dazu dienen, das Pendel 4 in eine obere Startposition zu bewegen und dort zu halten.

Nach dem Auslösen kann das Pendel 4 frei durch Schwerkraft beschleunigt nach unten schwingen. In einer anderen Ausführungsform kann vorgesehen sein, dass der Antrieb 12 das Pendel nach unten beschleunigt, beispielsweise um Bauhöhe zu sparen. In dieser Ausführungsform kann vorgesehen sein, dass der Antrieb 12 sich nach einer aktiven Beschleunigungsphase vom Pendel 4 löst, sodass das Pendel 4 frei schwingen kann.

Zum Abbremsen des Pendels 4 ist eine Bremsvorrichtung 14 vorgesehen, die in den nachfolgenden Figuren eingehender beschrieben wird. Das Pendel 4 kommt mit der Bremsvorrichtung 14 in Anlage und wird von dieser motorisch abgebremst.

Zum Betrieb der Prüfpendelanordnung sind des Weiteren eine Energieversorgung 16 und eine Steuerung 18 vorgesehen.

Fig. 2 zeigt einen Ausschnitt der Prüfpendelanordnung 2 aus Fig. 1, insbesondere des Antriebsteils.

Das Pendel 4 ist an seinem oberen Ende drehbar um ein Drehzentrum Z angeordnet, das durch eine Aufhängung 20 definiert ist.

An der Aufhängung 20 ist ein Positionsgeber 22 angeordnet, der mit dem Pendel 4 gekoppelt ist. Die Kopplung kann direkt oder indirekt erfolgen, insbesondere an einer Achse der Aufhängung 20.

Der Positionsgeber 22 ist vorliegend ein digitaler Drehwinkelgeber, der eine aktuelle Winkelposition des Pendels erfasst. Der Positionsgeber 22 ist mit der Steuerung 18 verbunden und übermittelt Daten, die die jeweils aktuelle Position des Pendels 4 beschreiben, an die Steuerung 18.

Die Steuerung 18 ist außerdem mit der Bremsvorrichtung 14 verbunden und steuert die Bremsvorrichtung 14, wie nachfolgend beschrieben, in Abhängigkeit von der aktuellen Position des Pendels 4. Die Steuerung 18 kann weiterhin Eigenschaften der Kopf-Hals-Baugruppe 10 berücksichtigen. So hat ein Kinderkopf andere Eigenschaften als ein Erwachsenenkopf 10.2, was Einfluss auf die Beschleunigung und damit auf die Aufprallgeschwindigkeit sowie -energie des Pendels 4 hat. Auch innerhalb eines gleichen Dummytyps haben unterschiedliche Exemplare unter Umständen innerhalb der zulässigen Toleranzen unterschiedliche physikalische Eigenschaften.

Zum Anheben des Pendels 4 weist der Antrieb 12 einen Motor 24 auf, der über einen Hülltrieb 26 einen Mitnehmer 28 bewegt. Der Hülltrieb 26 kann beispielsweise ein Zahnriemen oder eine Kette sein. Der Mitnehmer 28 liegt an dem Pendel 4 an und kann somit eine Kraft auf das Pendel 4 gegen die Pendelrichtung P bewirken. Der Mitnehmer 28 liegt entweder im freien Fall des Pendels 4 lose am Pendel 4 an und kann diesem vorauseilend vor dem Pendel 4 (in Pendelrichtung) fahren, um einen freien Fall zu simulieren. Das Pendel 4 kann weiterschwingen, wenn das Pendel 4 durch die Bremsvorrichtung 14 abgebremst wird.

In der hier dargestellten weiterführenden Ausführungsform kann bei zu geringer verfügbarer Raumhöhe eine Beschleunigung des Pendels 4 durch den Mitnehmer 28 erfolgen. Hierzu ist der Mitnehmer 28 mit Elektromagneten 29 ausgestattet, die an das Pendel 4 ankoppeln können. Der Mitnehmer 28 kann dann das Pendel 4 mittels des Motors 24 aktiv beschleunigen. Sobald das Pendel 4 an einen gegebenen Punkt die dort vorgesehene Geschwindigkeit hat, können die Elektromagneten 29 abgeschaltet und der Mitnehmer 28 vom Pendel 4 entkoppelt werden.

Fig. 3 zeigt einen weiteren Ausschnitt der Prüfpendelanordnung 2 aus Fig. 1.

An der Aufnahme 9 des Pendels 4 ist eine zu zertifizierende Kopf-Hals-Baugruppe 10 mit einer Halswirbelsäule 10.1 und einem Kopf 10.2 eines Crashtest-Dummys befestigt.

Dazu werden Pendel 4 und Kopf-Hals-Baugruppe 10 in einem Bremsbereich B (gestrichelt umrahmt) gemäß geltender Norm definiert abgebremst. Wo bei herkömmlichen Prüfpendelanordnungen eine Aluminiumwabenstruktur vorgesehen ist, übernimmt bei der Prüfpendelanordnung 4 ein Stößel 30 der Bremsvorrichtung 14 diese Aufgabe.

Die Bremsvorrichtung 14 weist des Weiteren eine Antriebseinheit 32 auf, von der der Stößel 30 linear in und gegen die Pendelrichtung P des Pendels 4 betätigt wird. Der Stößel 30 kann durch die Antriebseinheit 32 eine Bremskraft auf das Pendel 4 und die Kopf-Hals-Baugruppe 10 ausüben, die zu einer messbaren Kraft auf Kopf 10.2 und Halswirbelsäule 10.1 führt, die wiederum zu einer messbaren Deformation der Halswirbelsäule 10.1 führt.

An dem Pendel 4 ist eine Prallplatte 34 angeordnet. Wenn das Pendel 4 von oben ausgelenkt um eine Achse 36 pendelt und mittels des Stößels 30 abgebremst wird, entsteht beim Kontakt mit dem Stößel 30 im Laufe der Zeit eine mechanische Deformation am Stößel 30. Der Stößel 30 weist eine als Verschleißteil ausgebildete, austauschbare Spitze 38 auf, um den Verschleiß unaufwändig zu beheben. Des Weiteren ist es möglich, zu unterschiedlichen Anwendungszwecken unterschiedliche Stößel zu verwenden, die sich hinsichtlich ihrer Geometrie, Materialien und/oder physikalischen Eigenschaften unterscheiden können, zum Beispiel um den besten Kompromiss aus Verzögerungskurve, Dämpfungseigenschaften und Haltbarkeit zu erreichen.

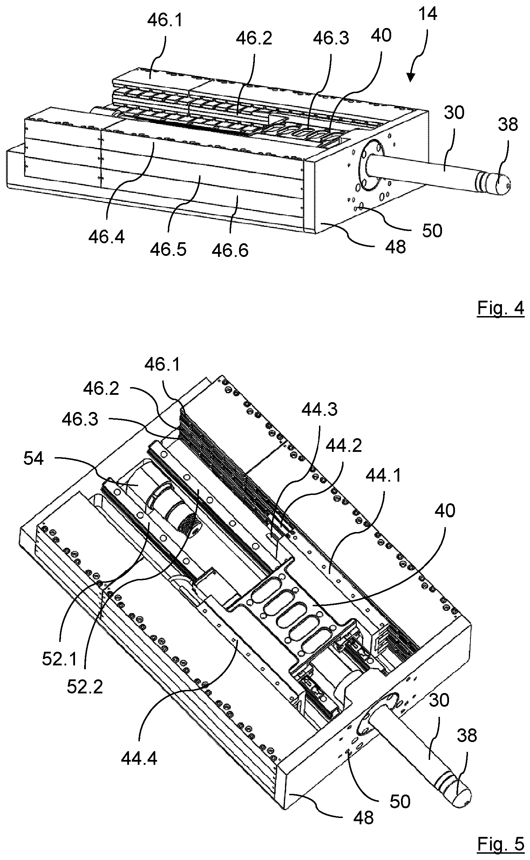

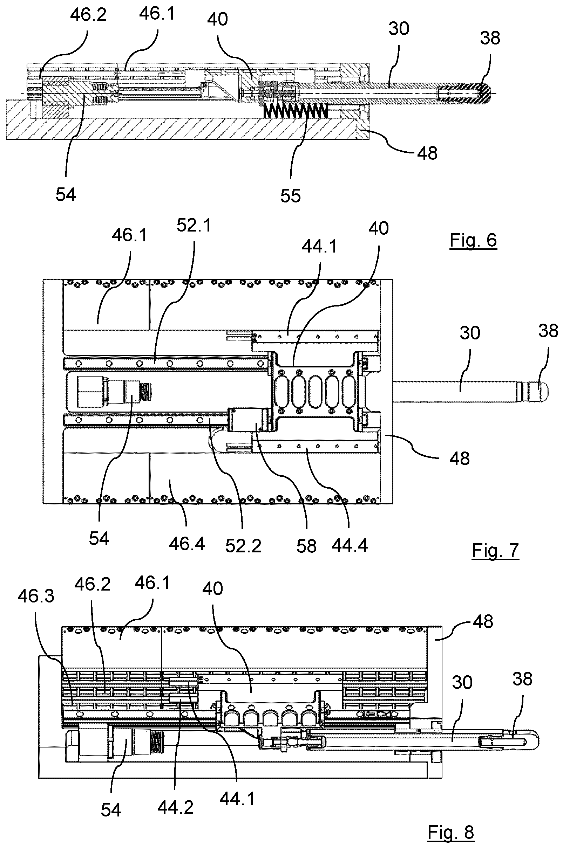

Die Fig. 4 bis 8 zeigen die Bremsvorrichtung 14 der Prüfpendelanordnung 2 in verschiedenen Darstellungen. Die Bremsvorrichtung 14 ist ohne Gehäuse dargestellt.

Der Stößel 30 ist von einem linear geführten Motorschlitten 40 gehalten, der beiderseits mit jeweils drei übereinander angeordneten Aktoren 44.1 - 44.4 von zwei Paaren von jeweils aufeinandergestapelten Linearmotoren 46.1 - 46.6 zusammenwirken (zwei der Aktoren sind in den Darstellungen nicht sichtbar).

Die beiderseits angeordneten Linearmotoren 46.1 - 46.6 erlauben die Erzeugung hoher Kräfte und Kraftverläufe, sodass hierdurch eine Weg-Zeit-Kurve eines herkömmlichen Prüfpendelversuchs an einer Aluminiumwabenstruktur exakt nachgebildet werden kann.

An einer Frontplatte 48 der Bremsvorrichtung 14 sind Befestigungen 50 zur Festlegung anderer Bauteile, z.B. einer Aluminiumwabenstruktur oder von Dämpfungselemente vorgesehen. Die Befestigungen sind im vorliegenden Ausführungsbeispiel als Gewindebohrungen 50 ausgestaltet.

Der Motorschlitten 40 ist auf zwei Schienen 52.1, 52.2 wälzgelagert geführt (Kugelschienenführung).

Die Bremsvorrichtung 14 weist einen Dämpfer 54 auf, um ein Durchschlagen des Motorschlittens 40 im Fehlerfalle zu verhindern.

Darüber hinaus ist an der Frontplatte 48 einerseits und an dem Stößel 30 oder dem Motorschlitten andererseits eine Feder 55 angeordnet, die den Stößel bei einem Systemausfall aktiv in das Gehäuse der Bremsvorrichtung 14 zurückzieht.

Die Führungsschiene 52.2 ist mit einem Messsystem 58 zur Messung der Position des Motorschlittens 40 ausgerüstet. Das Messystem 58 ist mit der Steuerung 18 gekoppelt, sodass dieser stets Positionsinformationen betreffend des Stößels 30 vorliegen.

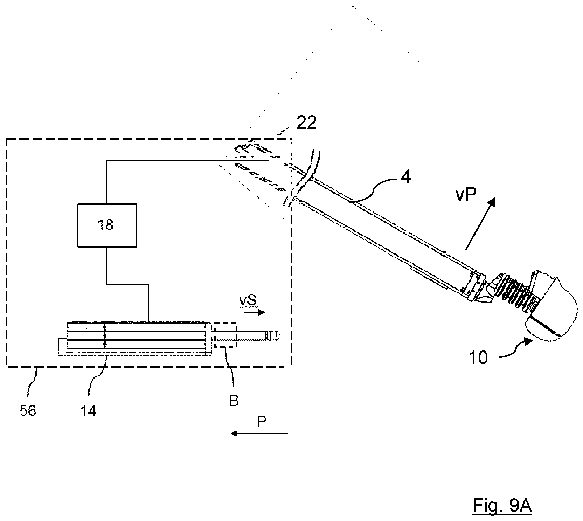

Fig. 9A - E zeigen jeweils einen Ausschnitt der Prüfpendelanordnung 2 aus Fig. 1 zu verschiedenen Phasen eines Zertifizierungsablaufs einer Kopf-Hals-Baugruppe 10 eines Crash-Test-Dummys.

In Fig. 9A sind zusätzlich die Komponenten eines Bremsvorrichtungssystems 56 schematisch dargestellt (gestrichelt umrahmt). Das Bremsvorrichtungssystem 56 weist unter anderem die Bremsvorrichtung 14, die Steuerung 18 sowie den Positionsgeber 22 auf. Das Bremsvorrichtungssystem 56 kann als Nachrüstsystem für bestehende Prüfpendelanordnungen vorgesehen werden.

In der Fig 9A dargestellten Phase wird das Pendel 4 nebst Kopf-Hals-Baugruppe 10 entgegen der Pendelrichtung P ausgelenkt und auf Startposition gebracht. Die Position des Pendels 4 wird mittels des Positionsgebers 22 registriert und von der Steuerung 18 verarbeitet.

Der Stößel 30 wird ebenfalls entgegen der Pendelrichtung über den Bremsbereich B hinaus ausgefahren und in Startposition (Beschleunigungsposition) gebracht. Die Position des Stößels wird mittels des Messsystems 58 ermittelt.

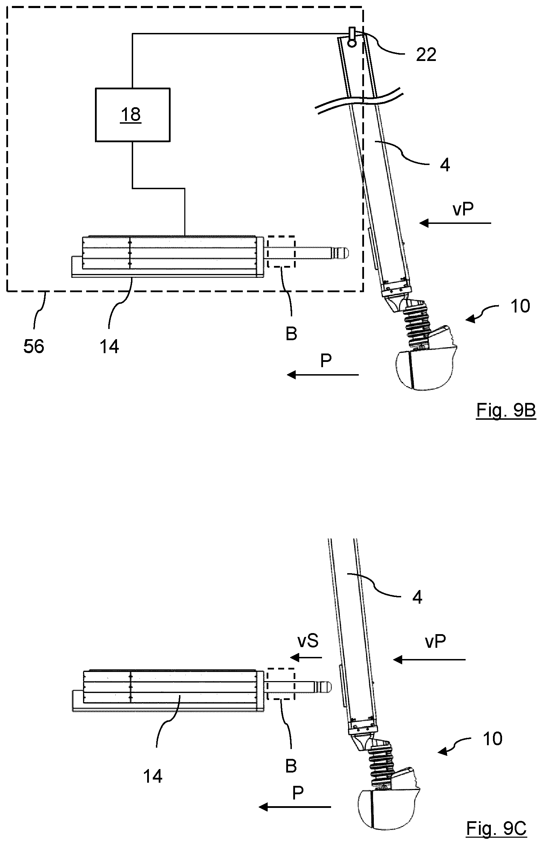

In der Fig. 9B dargestellten Phase wird das Pendel 4 beschleunigt und bewegt sich in Pendelrichtung auf den Stößel 30 zu. Der Stößel 30 steht zu diesem Zeitpunkt still.

In der in Fig. 9C dargestellten nächsten Phase hat der Stößel 30 auf eine momentane Geschwindigkeit vS beschleunigt, die im Wesentlichen der momentanen Geschwindigkeit vP des Pendels 4 entspricht, sodass das Pendel 4 kurz vor Erreichen des Bremsbereichs B sanft mit dem Stößel 30 zur Anlage kommt.

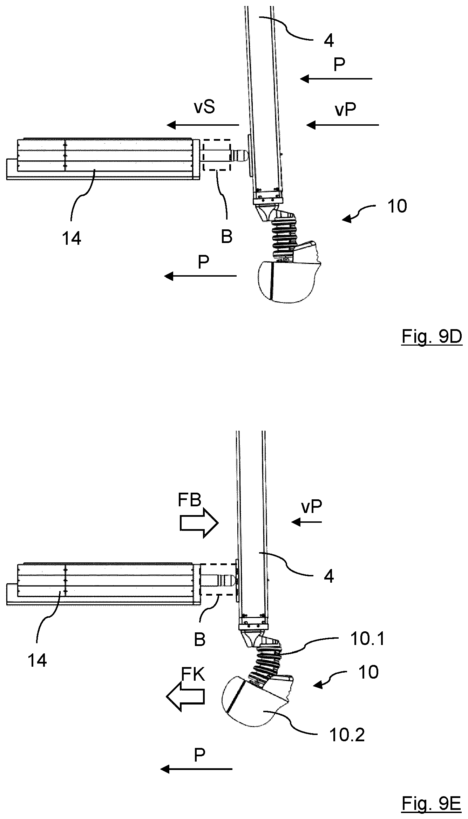

Die Position des Pendels wird mittels des Positionsgebers 22 registriert, die Position des Stößels wird durch das Messystem 58 ermittelt und von der Steuerung 18 verarbeitet, um ein in Fig. 9D dargestelltes sanftes Kontaktieren zu erreichen.

In der in Fig. 9E dargestellten Phase befinden sich Pendel 4 und Stößel 30 in Anlage und die Bremsvorrichtung 14 übt über den Stößel 30 eine Bremskraft FB auf das Pendel 4 und die daran festgelegte Kopf-Hals-Baugruppe 10 aus, die ein Auslenken des Kopfes 10.2 von einer neutralen Position und durch die dadurch wirkende Trägheitskraft FK ein Verbiegen des Halses 10.1 bedingen.

Die Bremsvorrichtung 14 kann das Verhalten einer Aluminiumwabenstruktur durch einen in der Steuerung 18 abgelegten Kraft- und Verzögerungsverlauf simulieren, sodass die Zertifizierung der Kopf-Hals-Baugruppe 10 mithilfe der vorliegend vorgestellten Prüfpendelanordnung 2 bzw. dem Bremsvorrichtungssystem 56 exakt nachempfunden werden kann.

Des Weiteren ist es in manchen Ausführungsformen möglich, Pendel 4 und Bremsvorrichtung 14 aufeinander abzugleichen, um das Pendel 4 gegenüber einem Normpendel abwandeln zu können und mit besseren Eigenschaften hinsichtlich Stabilität und dergleichen zu versehen.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen, beispielsweise hinsichtlich der Funktion oder der Anordnung einzelner, in einer beispielhaften Ausführungsform genannter Elemente, vornehmen kann, ohne den Schutzbereich zu verlassen, der durch die vorliegenden Ansprüche definiert wird.

### Bezugszeichenliste

- 2: Prüfpendelanordnung
- 4: Pendel
- 4.1: Oberes Ende
- 4.2: Unteres Ende
- 6: Aufhängung
- 8: Rahmenanordnung
- 9: Aufnahme
- 10: Kopf-Hals-Baugruppe
- 10.1: Halswirbelsäule
- 10.2: Kopf
- 12: Antrieb
- 14: Bremsvorrichtung
- 16: Energieversorgung
- 18: Steuerung
- 20: Aufhängung
- 22: Positionsgeber
- 24: Motor
- 26: Hülltrieb
- 28: Mitnehmer
- 29: Elektromagneten
- 30: Stößel
- 32: Antriebseinheit
- 34: Prallplatte
- 36: Achse
- 38: Spitze
- 40: Motorschlitten
- 44.1 - 44.4: Aktor
- 46.1 - 46.6: Linearmotor
- 48: Frontplatte
- 50: Befestigung
- 52.1, 52.2: Schiene
- 54: Dämpfer
- 55: Feder
- 56: Bremsvorrichtungssystem
- 58: Messsystem

- B: Bremsbereich
- FB: Bremskraft
- FK: Trägheitskraft des Kopfes 10.1
- P: Pendelrichtung
- vP: momentane Geschwindigkeit Pendel
- vS: momentane Geschwindigkeit Stößel
- Z: Drehzentrum

## Patentansprüche

1. Bremsvorrichtungssystem für eine Prüfpendelanordnung (2) zur Durchführung von Crashtest-Dummy-Zertifizierungen, mit einer Bremsvorrichtung (14) zum Abbremsen eines sich bewegenden Pendels (4), an dem eine Kopf-Hals-Baugruppe (10) eines Crashtest-Dummys anordenbar ist, in einem unteren Bremsbereich (B), **dadurch gekennzeichnet, dass** die Bremsvorrichtung (14) einen mittels einer Motoranordnung (32) axial betätigbaren Stößel (30) aufweist, der dazu ausgebildet ist, in dem definierten unteren Bremsbereich (B) mit dem Pendel (4) zur Anlage zu kommen und das Pendel (4) durch eine mittels des Stößels (30) ausgeübten Bremskraft (FB) abzubremsen.

2. Bremsvorrichtungssystem nach Anspruch 1, mit einem Positionsgeber (22) zur Anordnung an dem Pendel (4), um eine Momentanposition des Pendels (4) zu ermitteln, wobei eine Steuerung (18) vorgesehen ist, die mit dem Positionsgeber (22) und der Bremsvorrichtung (14) gekoppelt ist, wobei die Steuerung (18) dazu eingerichtet ist, die Motoranordnung (32) in Abhängigkeit von den Signalen des Positionsgebers (22) zu steuern.

3. Bremsvorrichtungssystem nach Anspruch 1 oder 2, wobei die Motoranordnung (32) wenigstens zwei Linearmotoren (46.1, 46.2, 46.3, 46.4, 46.5, 46.6) aufweist, wobei der Stößel (30) an einem Motorschlitten (40) festgelegt ist, wobei der Motorschlitten (40) in den Linearmotoren (46.1, 46.2, 46.3, 46.4, 46.5, 46.6) geführt ist, wobei die Linearmotoren (46.1, 46.2, 46.3, 46.4, 46.5, 46.6) seitlich des Motorschlittens (40.1, 40.2, 40.3, 40.4, 40.5, 40.6) angeordnet sind.

4. Bremsvorrichtungssystem nach einem der vorangegangenen Ansprüche, wobei der Stößel (30) punktgelagert ist und/oder eine austauschbare Spitze (38) aufweist.

5. Bremsvorrichtungssystem nach einem der vorangegangenen Ansprüche, wobei die Bremsvorrichtung (14) einen Dämpfer (54) zur Verhinderung eines Durchschlagens des Stößels (30) aufweist.

6. Bremsvorrichtungssystem nach einem der vorangegangenen Ansprüche, wobei die Bremsvorrichtung (14) eine Befestigungsanordnung (50) zur Festlegung eines Deformationselements aufweist.

7. Prüfpendelanordnung zur Durchführung von Crashtest-Dummy-Zertifizierungen, mit einem starren Pendel (4), das an einem ersten Ende (4.1) um eine obere Drehachse (Z) herum drehbar angeordnet ist und das an einem zweiten Ende (4.2) eine Aufnahme (9) zur Anordnung einer Kopf-Hals-Baugruppe (10) eines Crashtest-Dummys aufweist, wobei eine Bremsvorrichtung (14) nach einem der vorangegangenen Ansprüche vorgesehen ist.

8. Prüfpendelanordnung nach Anspruch 7, wobei wenigstens ein Antrieb (12) zum Beschleunigen des Pendels (4) aus einer oberen Startposition heraus vorgesehen ist.

9. Prüfpendelanordnung nach Anspruch 7 oder 8, wobei der Positionsgeber (22) an einer Pendelachse (Z) angeordnet ist.

10. Prüfpendelanordnung nach einem der Ansprüche 7 bis 9, wobei eine Hebevorrichtung (28) zum Anheben des Pendels (4) in eine Startposition vorgesehen ist, wobei die Hebevorrichtung (28) einen abkoppelbaren Antrieb (24) aufweist, sodass das Pendel (4) bei Eintritt in den Bremsbereich (B) frei schwingt.

11. Verfahren zum Betrieb einer Prüfpendelanordnung (2) nach einem der Ansprüche 7 bis 10, wobei das Pendel (4) in eine obere Startposition ausgelenkt und mithilfe des wenigstens einen Antriebs (24) aus der oberen Startposition heraus beschleunigt und im unteren Bremsbereich (B) durch die Bremsvorrichtung (14) motorisch abgebremst wird.

12. Verfahren nach Anspruch 11, wobei der Stößel (30) in eine ausgefahrene Position gebracht wird und in Abhängigkeit von der Position des Pendels (4) zuerst in Pendelrichtung (P) beschleunigt und anschließend entgegen der Pendelrichtung durch Aufbringung einer Motorkraft zusammen mit dem Pendel (4) abgebremst wird.

13. Verfahren nach Anspruch 12, wobei der Stößel (30) zwischen Beschleunigung in Pendelrichtung (P) und Abbremsen entgegen der Pendelrichtung (P) eine Fahrt in Pendelrichtung (P) durchführt.

## Claims

1. Braking apparatus system for a test pendulum arrangement (2) for carrying out crash test dummy certifications, having a braking apparatus (14) for decelerating a moving pendulum (4), on which a head-neck assembly (10) of a crash test dummy can be arranged, in a lower braking area (B), **characterized in that** the braking apparatus (14) has a plunger (30) which can be axially actuated by means of a motor arrangement (32) and is designed to come to rest with the pendulum (4) in the defined lower braking area (B) and to decelerate the pendulum (4) by means of a braking force (FB) exerted using the plunger (30).

2. Braking apparatus system according to claim 1, having a position encoder (22) for arrangement on the pendulum (4) in order to determine an instantaneous position of the pendulum (4), wherein a controller (18) is provided which is coupled to the position encoder (22) and to the braking apparatus (14), wherein the controller (18) is equipped to control the motor arrangement (32) as a function of the signals of the position encoder (22).

3. Braking apparatus system according to claim 1 or 2, wherein the motor arrangement (32) has at least two linear motors (46.1, 46.2, 46.3, 46.4, 46.5, 46.6), wherein the plunger (30) is fixed to a motor carriage (40), wherein the motor carriage (40) is guided in the linear motors (46.1, 46.2, 46.3, 46.4, 46.5, 46.6), wherein the linear motors (46.1, 46.2, 46.3, 46.4, 46.5, 46.6) are arranged to the side of the motor carriage (40.1, 40.2, 40.3, 40.4, 40.5, 40.6).

4. Braking apparatus system according to one of the preceding claims, wherein the plunger (30) is point bearing mounted and/or has an exchangeable tip (38).

5. Braking apparatus system according to one of the preceding claims, wherein the braking apparatus (14) has a damper (54) for preventing a penetration of the plunger (30).

6. Braking apparatus system according to one of the preceding claims, wherein the braking apparatus (14) has a fastening arrangement (50) for fixing a deformation element.

7. Test pendulum arrangement for carrying out crash test dummy certifications, having a rigid pendulum (4) which is arranged to be rotatable about an upper axis of rotation (Z) on a first end (4.1) and which has a receptacle (9) for arranging a head-neck assembly (10) of a crash test dummy on a second end (4.2), wherein a braking apparatus (14) is provided according to one of the preceding claims.

8. Test pendulum arrangement according to claim 7, wherein at least one drive (12) is provided for accelerating the pendulum (4) out of an upper start position.

9. Test pendulum arrangement according to claim 7 or 8, wherein the position encoder (22) is arranged on a pendulum axis (Z).

10. Test pendulum arrangement according to one of claims 7 to 9, wherein a lifting device (28) is provided for lifting the pendulum (4) into a start position, wherein the lifting device (28) has a drive (24) which can be decoupled so that the pendulum (4) swings freely upon entering into the braking area (B).

11. Method for operating a test pendulum arrangement (2) according to one of claims 7 to 10, wherein the pendulum (4) is displaced into an upper start position and is accelerated from there out of the upper start position with the aid of the at least one drive (24), and is decelerated in a motorized way by the braking apparatus (14) in the lower braking area (B).

12. Method according to claim 11, wherein the plunger (30) is moved into an extended position and, as a function of the position of the pendulum (4), is initially accelerated in the pendulum direction (P) and is subsequently decelerated counter to the pendulum direction by applying a motor force together with the pendulum (4).

13. Method according to claim 12, wherein the plunger (30) carries out a travel in the pendulum direction (P) between an acceleration in the pendulum direction (P) and a deceleration counter to the pendulum direction (P) .

## Revendications

1. Système de dispositif de freinage pour un agencement de pendue d'essai (2) pour la réalisation de certifications d'un mannequin de test de collision, avec un dispositif de freinage (14) pour freiner un pendule (4) se déplaçant, sur lequel un ensemble tête-cou (10) d'un mannequin de test de collision peut être disposé, dans une zone de freinage inférieure (B), **caractérisé en ce que** le dispositif de freinage (14) comporte un poussoir (30) pouvant être actionné axialement au moyen d'un système motorisé (32), qui est constitué pour venir en appui dans la zone de freinage (B) inférieure définie avec le pendule (4) et freiner le pendule (4) par une force de freinage (FB) exercée au moyen du poussoir (30).

2. Système de dispositif de freinage selon la revendication 1, avec un indicateur de position (22) pour mise en place sur le pendule (4) pour déterminer une position momentanée du pendule (4), sachant qu'une commande (18) est prévue, qui est couplée avec l'indicateur de position (22) et le dispositif de freinage (14), sachant que la commande (18) est agencée pour commander le système motorisé (32) en fonction des signaux de l'indicateur de position (22).

3. Système de dispositif de freinage selon la revendication 1 ou 2, sachant que le système motorisé (32) comporte au moins deux moteurs linéaires (46.1, 46.2, 46.3, 46.4, 46.5, 46.6), sachant que le poussoir (30) est fixé sur un chariot motorisé (40), sachant que le chariot motorisé (40) est guidé dans les moteurs linéaires (46.1, 46.2, 46.3, 46.4, 46.5, 46.6), sachant que les moteurs linéaires (46.1, 46.2, 46.3, 46.4, 46.5, 46.6), sont disposés latéralement par rapport au chariot motorisé (40.1, 40.2, 40.3, 40.4, 40.5, 40.6).

4. Système de dispositif de freinage selon l'une quelconque des revendications précédentes, sachant que le poussoir (30) est logé de façon ponctuelle_et/ou comporte une pointe échangeable (38).

5. Système de dispositif de freinage selon l'une quelconque des revendications précédentes, sachant que le dispositif de freinage (14) comporte un amortisseur (54) pour éviter un enfoncement du poussoir (30).

6. Système de dispositif de freinage selon l'une quelconque des revendications précédentes, sachant que le dispositif de freinage (14) comporte un système de fixation (50) pour la fixation d'un élément de déformation.

7. Agencement de pendule d'essai pour la réalisation de certifications de mannequin de test de collision, avec un pendule rigide (4), qui est disposé sur une première extrémité (4.1), pouvant tourner autour d »'un axe de rotation supérieur (Z) et qui comporte sur une deuxième extrémité (4.2) un logement (9) pour la mise en place d'un ensemble tête-cou (10) d'un mannequin de test de collision, sachant qu'un dispositif de freinage (14) est prévu selon l'une quelconque des revendications précédentes.

8. Agencement de pendule d'essai selon la revendication 7, sachant qu'au moins un système d'entraînement (12) est prévu pour accélérer le pendule (4) à partir d'une position de départ supérieure.

9. Agencement de pendule d'essai selon la revendication 7 ou 8, sachant que l'indicateur de position (22) est disposé sur un axe de pendule (Z).

10. Agencement de pendule d'essai selon l'une quelconque des revendications 7 à 9, sachant qu'un dispositif de levier (28) est prévu pour lever le pendule (4) dans une position de départ, sachant que le dispositif de levier (28) comporte un système d'entraînement (24) pouvant être désaccouplé de telle manière que le pendule (4) oscille librement en entrant dans la zone de freinage (B).

11. Procédé de fonctionnement d'un agencement de pendule d'essai (2) selon l'une quelconque des revendications 7 à 10, sachant que le pendule (4) est orienté dans une position de départ supérieure et est accéléré de la position de départ supérieure à l'aide d'au moins un système d'entraînement (24) et est freiné dans la zone de freinage inférieure (B) par le dispositif de freinage (14) .

12. Procédé selon la revendication 11, sachant que le poussoir (30) est placé dans une position sortie et est accéléré en fonction de la position du pendule (4) d'abord en direction du pendule (P) et est ensuite freiné en opposition à la direction du pendule par application d'une force motrice conjointement avec le pendule (4).

13. Procédé selon la revendication 12, sachant que le poussoir (30) effectue une course dans la direction du pendule (P) entre l'accélération en direction du pendule (P) et le freinage opposé à la direction du pendule (P).
